# EUROPEAN PATENT APPLICATION

(11) **EP 2 339 262 A2**
(43) Date of publication of application: **29.06.2011**
(21) Application number: 09813836.5
(22) Date of filing: 22.09.2009
(51) Int. Cl.: F24J 2/54

(54) **PHOTOVOLTAIC PANEL SUPPORT STRUCTURE WITH POLAR AXIS OF ROTATION**

(30) Priority: 26.09.2008 ES 200801952 U
(71) Applicant: Solid Enginyeria, S.L., 08030 Barcelona (ES)
(72) Inventor: CIVIT VIDAL, Francisco, E-08030 Barcelona (ES); SERRET SANS, Oscar, E-08030 Barcelona (ES)
(74) Representative: Ponti Sales, Adelaida
(86) International application number: PCT/IB2009/054142
(87) International publication number: WO 2010/035212

(57) **Abstract**

Support structure for solar panels, of the type that supports at least a polar rotation axis for at least a solar panel, the mounting of the structure including two parallel support profiles. It is **characterised by** the fact that the above-mentioned polar rotation axis is assembled in a flip-top frame around an axis of rotation that joins the above-mentioned parallel support profiles. Therefore, in folded position the above-mentioned polar rotation axis stays in the plane determined by said parallel support profiles with their ends contiguous to each of the profiles. Consequently, in lifted position the above-mentioned polar rotation axis remains inclined with regard to the horizontal plane and in a plane perpendicular to the longitudinal axis of the parallel support profiles. It all makes the invention particularly light and of easy and quick assembly, especially adapted for its installation on building roofs.

## Description

The present invention refers to a support structure for solar panels offering a great structural simplicity and lightness and of easy and quick assembly especially adapted for its installation on building roofs.

### BACKGROUND OF THE INVENTION

Support structures for solar panels of the type based on two profiles that form a mounting, which supports one or more polar axis of rotation by means of other profiles, are well known. They allow to orientate the panels with a unique degree of freedom so that the angle of incidence of the sunbeams on the panels increases considerably thus raising its output.

Generally, the above mentioned other profiles are arranged forming triangles with the profiles of the mounting, whose top vertexes support the ends of the polar rotation axis.

This type of structure, of which the model of utility ES 1 061 938 U constitutes an example, is of simple assembly but it demands adjustments in the assembly of the profiles that can raise difficulties to the final installer. This is so, especially because the type of structure that one proposes is not particularly self-supporting, which entails an increase of the time of assembly and adjustment and therefore of the costs. In addition, in this type of structure the independent assembly of each one of the polar axis is required.

On the other hand, it is increasingly customary in all kinds of facilities to give as many factory-assembled components as possible, to improve the quality of the product and to avoid the dependence of the quality of the final product to the progress of the work and to the skill of the installer.

Likewise, very particularly in the sector of the solar power, due to the great number of structures being installed nowadays, it is a great competitive advantage to make products easy to install, transport and pack.

Finally, the integration in an only structure allows an important increase of the flexibility and therefore a reduction of the weight, indispensable condition for example when the solar panels must be assembled on roofs.

Therefore, it is necessary to be able to have structures of support of panels that give a response to all these requirements.

### DESCRIPTION OF THE INVENTION

For all these reasons, the present invention proposes a support structure for solar panels, of the type that supports at least a polar rotation axis for at least a solar panel, including the mounting of the structure two parallel support profiles. It is characterised by the fact that the above-mentioned polar rotation axis is assembled in a flip-top frame around an axis of rotation that joins the parallel support profiles. Therefore, in folded position the above-mentioned polar rotation axis stays in the plane determined by said parallel support profiles with their ends contiguous to each of the profiles. Consequently, in lifted position the polar rotation axis remains inclined with regard to the horizontal plane and in a plane perpendicular to the longitudinal axis of the parallel support profiles.

This structure gives a solution to the mentioned disadvantages, since:
- In folded form, it adopts a flat form that facilitates its manipulation and transport.
- The fact of using profiles in the ends avoids high efforts and permits the use of thin profiles and therefore a lower weight and cost. In addition, it is specially adapted for building roofs, where the weight of the facilities determines considerably its regulation and final orientation, two fundamental factors to optimise the output and the profitability of an installation of production of solar power.
- The assembly is considerably simple, since it is sufficient with pivoting the frames and stiffening them in their higher position, where they remain with the predetermined inclination. This avoids mistakes of positioning, for the in-factory assembly of the frames allows providing them with the correct inclination.
- No operations of weld are needed during its manufacture and assembly.
- Especially, it allows the assembly of the whole installation in approximately 10 minutes.

Preferably, the flip-top frame is a trapezoidal framework whose mounting meets its axis of rotation. The side opposite to the mounting of trapezoidal framework is the polar rotation axis and the remaining sides are two flip-top profiles of different length, so that the above-mentioned frames can be made from profiles.

More preferably, the structure of the invention includes a union profile between the highest end, in unfolded position, of the above-mentioned polar rotation axis and the support profile of the same side, so that it constitutes a cross brace of the above-mentioned structure in its unfolded position.

Profitably, the structure of the invention includes several axis of polar rotation and several flip-top frames, so that it is possible to provide the structure with several axis.

Preferably, the flip-top frame is a trapezoidal framework whose mounting fits in its axis of rotation, the side opposite to the mounting of trapezoidal framework is the polar rotation axis and the remaining sides are two flip-top profiles of different length, so that the above mentioned frames can be made from profiles.

More preferably, the structure of the invention includes a joint profile between the top end (in unfolded position) of the above-mentioned polar rotation axis and the support profile of the same side, so that it constitutes a cross brace of the above-mentioned structure in its unfolded position.

Profitably, the structure of the invention includes several c of polar rotation and several flip-top frames, so that it is possible to provide a structure with several axis.

More profitably, the top and / or low ends of the aforementioned axis of polar rotation are joined with the contiguous axis of polar rotation by means of stems.
This option allows to disregard cross braces in all the frames, and to lift all the axis of polar rotation of the structure with an only operation.

Preferably, the structure of the invention includes four or five (depending on the dimensions of the FV modules) axis of polar rotation for four or five solar panels and their respective frames. This number of axis is ideal, since it allows supporting a high number of panels with a structure of handy and transportable dimensions.

A couple of the structures described in the previous paragraph can also be added in, the second one of them without engine, in such a way that the engine of the first structure drives the second structure by means of a junction, which can be rigid (if both structures rest on the same mounting) or articulated (if they rest on surfaces with a certain inclination).

Profitably, the structure of the invention includes a collective operation of the previously mentioned axis of polar rotation, which is more preferably a linear operation.

Preferably, every polar rotation axis includes in its bottom end means to linkage with the above mentioned operation, which consists of a joint pulley of the above mentioned polar rotation axis for its bottom end, being said pulley connected by its perimeter, by means of a cable and the engine.

Profitably, every polar rotation axis includes in its low-end means of linkage with a motorised drive arranged in one of the axis, being such means constituted by at least a connecting rod arranged distantly from the axis. The axis can be linked with different connecting rods, or it is possible to arrange an only connecting rod that gesticulates simultaneously to all the axis.

According to a variant of accomplishment of the invention, the motorised drive is constituted by a Scottish mechanism.
This Scottish mechanism includes a linear actuator connected to the axis of rotation of the panel, in which this actuator moves a guide perpendicular to it, guide into which there is fitted a steady axis arranged under the axis of rotation. The kinematics of this system has proved to be specially adapted for the movement of solar follow-up needed in this type of facilities.

More profitably, the above-mentioned connecting rod is connected by means of an absorber to a preset point of the structure, for example a point arranged in an axis of rotation, so that it allows absorbing and preventing them from transmitting the vibrations originated by the wind on the plates to the structure.

Profitably, the inclination of the above-mentioned polar rotation axis is lower than 40 °.

More profitably, the maximum height in folded position is lower than 1.2 m on the cover.

Preferably, the profiles that compose it are of aluminium alloy, with an anticorrosion covering adapted for its placement on steel rooftops, in which case they are more adapted for their placement on floors.

More preferably, the panels are of electric, thermal or hybrid power generation.

More profitably, all the joints of the structure are threaded, which allows an easy and quick installation with the minimal tools.

Preferably, the engine system is installed approximately in the central part of the module, in order to reduce the efforts of transmission on pulleys or connecting rods.

Preferably, the structure of the invention includes a mechanism of fixing of the plates to the axis with an upper fixing clamp and a lower fixing clamp.

Both clamps can be sliding on the axis, or it might be sufficient if only one of them is, and they include, for the side faced at the edge of the plate, some inclined edges of support to press the plate against the axis. This system of clamps allows pressing the plate against the axis from top and bottom with a few simple screw-tightening operations, so that it remains strongly fixed against the axis by contraction. Preferably, the inclinations of both clamps are calculated to guarantee an identical lateral force of friction in the top and bottom parts of the plate, thus to avoid any misalignment regarding their ideal position.

Finally, the structure of the invention is modular and includes means of assembly in its ends, so structures of great length can be obtained and assembled from the basic module.

### BRIEF DESCRIPTION OF THE DRAWINGS

For a better understanding n of all that has been exposed some drawings are enclosed in which, schematically and only as a non-restricting example, a practical embodiment of the structure of the invention is represented.
Figure 1 is a sight in perspective of the support structure of solar panels of the invention in unfolded position.
Figure 2 is a sight in perspective of the support structure of solar panels of the invention in folded position.
Figure 3 is a sight detailed in perspective of the operation of the polar axis of the structure.
Figure 4 is a sight in perspective that shows a variant of accomplishment in which the means of operation of the rotation of the axis consist of a collective connecting rod. Likewise, in this accomplishment the location of the means of motorised drive of the follow-up system is displayed.
Figure 5 is a section of the system of operation based on Scottish yoke.
Figure 6 is a perspective that shows the position of the fixing clamps.
Figure 7 is a sight in perspective of the operation with Scottish yoke especially devised for the invention.
Figure 8 is a detail of the bottom clamp, which in the variant of accomplishment is the one fixed with regard to the polar axis.
Figure 9 is a detail of the top clamp that slides with regard to the polar axis.

### DESCRIPTION OF PREFERRED EMBODIMENTS

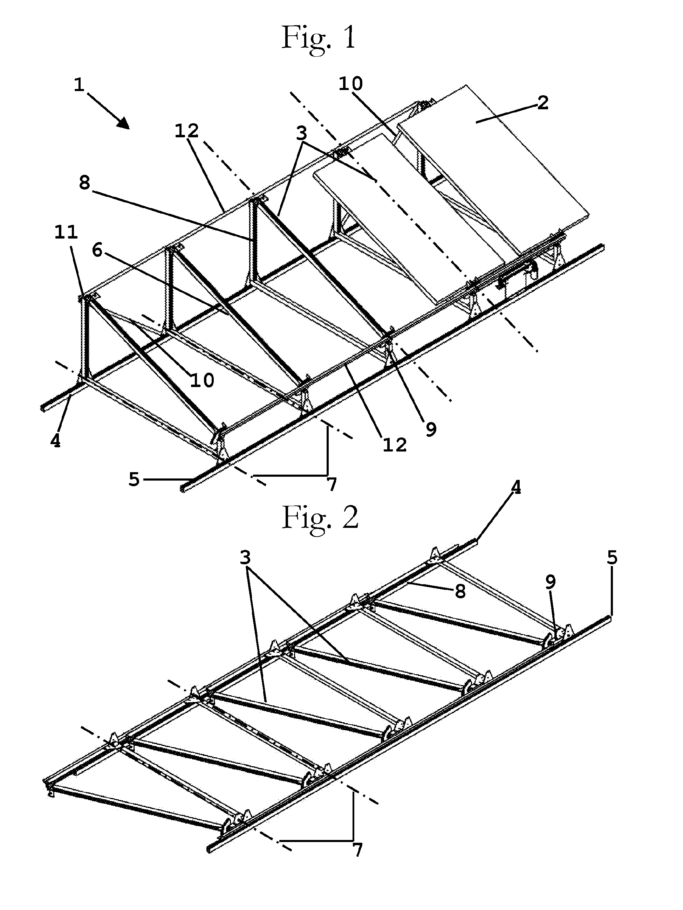

As shown on figures 1 and 2, according to a preferred embodiment, the support structure 1 for solar panels 2 of the invention supports at least a polar rotation axis 3 for at least a solar panel 2, in which the mounting 1 is formed by two parallel support profiles 4, 5.

Actually, in the structure of the invention, the polar rotation axis 3 is assembled in a flip-top frame 6 around an axis of rotation 7 that joins the above mentioned parallel support profiles 4, 5, such that:
- In folded position, as shown on figure 2, the polar rotation axis 3 remains in the plane determined by the parallel support profiles 4, 5 with its ends contiguous to each of them and,
- In lifted position, as shown on figure 1, the polar rotation axis 3 remains inclined with regard to the horizontal plane and in a plane perpendicular to the longitudinal axis of the parallel support profiles 4, 5.

The mentioned flip-top frame 6 is a trapezoidal framework whose mounting corresponds to its axis of rotation 7. The side opposite to the above mentioned mounting is the polar rotation axis 3 and the remaining sides are two flip-top profiles 8, 9 of different length which in lifted position can be fixed by means of a profile 10 between the top end 11, in unfolded position, of the above mentioned polar rotation axis 3 and the support profile 4 of the same side, so that it becomes a cross brace of the above mentioned structure in its unfolded position. That is to say, once the structure is unfolded, it is sufficient to screw the ends of these cross braces to set the position of use of the structure.

The structure of the invention can hold up several axis of rotation, for example five assembled in their respective frames, and the top and / or bottom ends of the above-mentioned axis of polar rotation 3 could be joined with the contiguous axis of polar rotation by means of stems 12. Hereby, all the axis of rotation can be unfolded and fixed by an only movement and by stiffening only some of them, for example two.

Once the structure is unfolded, it is possible to proceed to fix the solar panels and the operations in rotation of the polar axis.

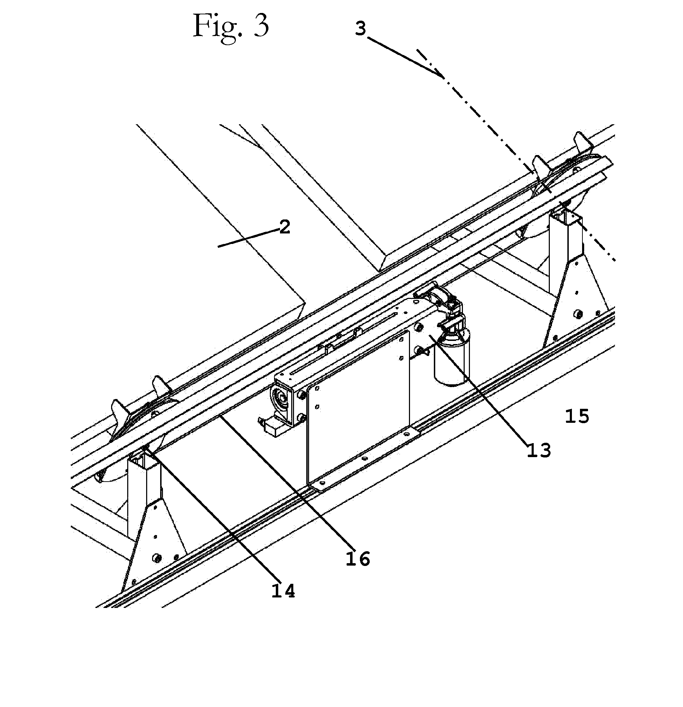

To simplify the above-mentioned operations, as it is shown on figure 3 and well known in technology, it is possible to resort to the only collective operation 13 of the aforementioned axis of polar rotation 7, which in turn could be implemented with a linear engine.

The linkage between the engine and the bottom ends of the axis can be made with pulleys connected 15 to every polar rotation axis 7 by its bottom end 14, operated by means of a cable 16 and the above-mentioned engine 13.

The pulleys could also be replaced with a connecting-rod system, as in the accomplishment that will be described below by more detail.

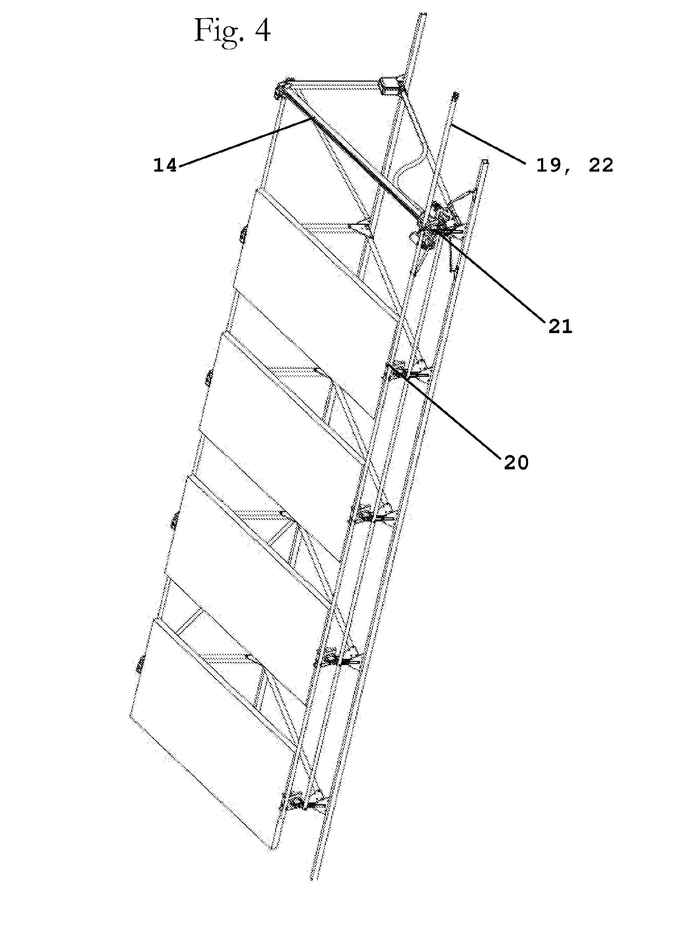

According to another embodiment shown on figure 4 the operation in rotation of the axis can be implemented, so that every polar rotation axis 3 would include means 19 in its bottom end 20 for the linkage with a motorised drive 21 arranged in one of the axis 14, being said means 19 for the linkage constituted by at least a joint connecting rod 22. Obviously, this connecting rod is placed away from the axis to make them turn. They can be connecting the axis with different connecting rods 19, or an only connecting rod can be adjusted so it 19 operates all the axis 3 simultaneously, if the tensions and the deformations permit it.

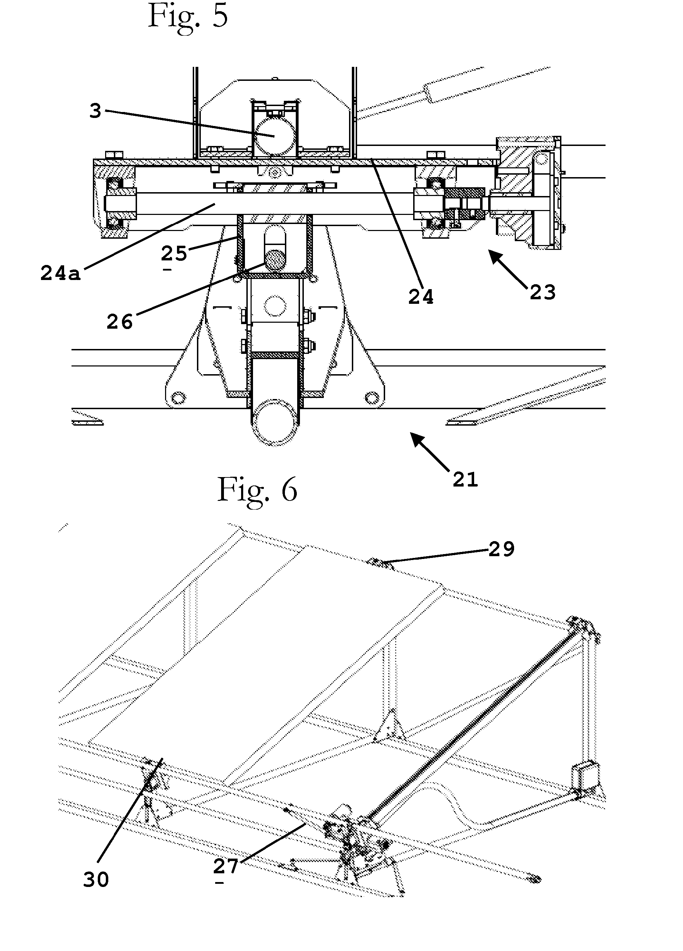

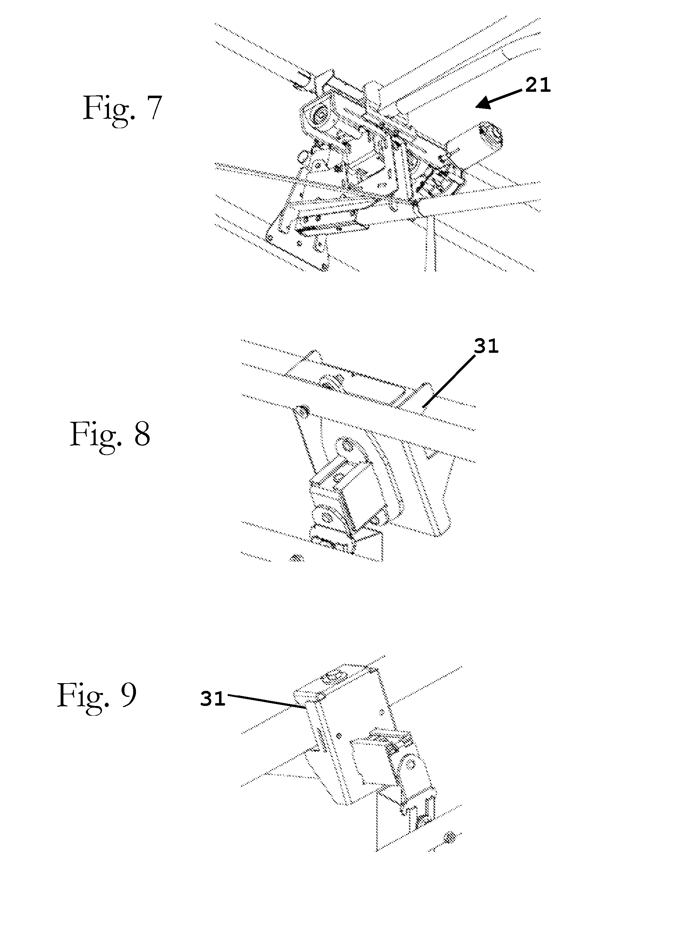

According to a variant of particularly preferred embodiment, and as it is estimated on figures 5 and 7, the motorised drive 21 is constituted by a mechanism of Scottish yoke 23, consisting of a linear actuator 24 connected to the axis of rotation 3 of the panel to which this linear actuator 24 relatively displaces itself, by means of a screw to 24 a perpendicular guide 25 to said actuator 24, guides 25 along which a joint axis of the structure 1 slips 26 are arranged under the polar axis 3.

To minimise the transmission of vibrations originated in the plates and to absorb them, in an embodiment of the represented invention it is expected that the connecting rod of operation is connected by means of an absorber 27 to a fixed point of the structure 1, for example a point arranged in an axis of rotation.

Another innovation of the invention, which also helps minimising the time of assembly and to assuring a solid and correct placement of any type of plate, regardless of its thickness and length, is that it includes a mechanism of fixing of the plates to the axis provided with a top fixing clamp 29 and a bottom fixing clamp 30.

In this mechanism both clamps 29, 30 are sliding on the axis 3, or only one of them 29 or 30, as seen on figures 8 and 9, and include for the side faced at the edge of the plate 2 a few inclined edges 31 of support, as seen on figures 8 and 9, to press the plate 2 against the axis 3.

To avoid any misalignment of the ideal position of the plates 2, both clamps 29, 30 are designed to guarantee an identical lateral force of friction in the top and bottom sides of the plate 2. The described structure can support both panels of electric power, especially photovoltaic panels, and panels of generation of thermal or hybrid energy, for which the sections of the profiles will be adapted to the weight supported by every frame.

Finally, the structure of the invention is modular and includes means of union with an identical structure, being these means of union arranged in the ends of the profiles that form the mounting of the structure. In this case, it is expected that the linear engine is perceptively installed in the end of the structure, so that having joined two structures, the engine would remain in the central part that makes the union of two modules, for example of 10 panels, in order to reduce the loads on the mechanism of the transmission of rotation.

Therefore, with the structure of the invention the costs of manufacture, transport and assembly are considerably reduced whilst obtaining at the same time a great simplicity, a limited weight of some 50 Kg (for a structure of five axis for five panels) and an assembly arranged with regard to the final inclinations of the panels.

## Claims

1. Support structure (1) for solar panels (2), of the type that supports at least a polar rotation axis (3) for at least a solar panel (2); the base of the structure (1) including two parallel support profiles (4, 5), **characterised in that** the above mentioned polar rotation axis (3) is assembled in a flip-top frame (6) around an axis of rotation (7) linked to the above mentioned parallel support profiles (4, 5), so that in folded position the polar rotation axis (3) stays in the plane determined by said parallel support profiles (4, 5) with its ends contiguous to each of the profiles (4, 5), and in lifted position the above mentioned polar rotation axis (3) remains inclined with regard to the horizontal plane and in a plane perpendicular to the longitudinal axis of the parallel support profiles (4, 5).

2. Support structure (1) according to claim 1, wherein the above mentioned flip-top frame (6) is a trapezoidal frame whose base corresponds to its axis of rotation (7), the side opposite to the above mentioned base being the polar rotation axis (3) and the remaining sides being two flip-top profiles (8, 9) of different length.

3. Support structure (1) according to any of the previous claims, which includes a joint profile (10) between the top end (11), in unfolded position, of the polar rotation axis (3) and the support profile (4) of the same side, so that it constitutes a cross brace of the above mentioned structure in its unfolded position.

4. Structure (1) according to any of the previous claims, which includes several axis of polar rotation (3 and several flip-top frames (6).

5. Support structure (1) according to the previous claim, in which the top and / or bottom ends of the above mentioned axis of polar rotation (7) are joined with the adjacent axis of polar rotation by means of stems (12).

6. Support structure (1) according to any of claims 4 or 5, which includes five axis of polar rotation (7) for five solar panels (2) and their respective frames (6).

7. Support structure (1) according to any of the previous claims, which entails a joint operation (13) of the above mentioned axis of polar rotation (7).

8. Structure (1) according to any of the previous claims, in which the joint operation (13) is a linear engine.

9. Support structure (1) according to the previous claim, in which every polar rotation axis (7) includes in its bottom end (14) means for the linkage with the above mentioned operation (13).

10. Support structure (1) according to the previous claim, in which the above mentioned means for the linkage with expert include a joint pulley (15) of the polar rotation axis (7) for its bottom end (14), being said pulley connected by its perimeter, by means of a cable (16), by the above mentioned engine (13).

11. Support structure (1) according to any of the previous claims, in which the inclination of the polar rotation axis (7) is lower than 50 °.

12. Support structure (1) according to any of the previous claims, in which the profiles that compose it are made of aluminium or steel alloy or with anticorrosion treatment.

13. Support structure (1) according to any of the previous claims, in which the panels are of electric, thermal or hybrid power generation.

14. Support structure (1) according to any of the previous claims, in which all the unions are threaded.

15. Support structure (1) according to any of the previous claims, which is modular and includes means of assembly in its ends.

16. Support structure (1) according to any of the previous claims, in which the linear engine is perceptively installed in the end of the above-mentioned structure, so that on having joined two structures, the engine stays in the central part that forms the union of two modules.

17. Support structure (1) according to any of the previous claims, in which every polar rotation axis (3) includes means (19) for the linkage with a motorised drive (21) in its bottom end (20), arranged in one of the axis (14), being said means (19) for the linkage constituted by at least a connecting rod (22) of union arranged away from the axis to make them turn.

18. Support structure (1) according to the previous claim, in which they can be connected the axis with different connecting rods (19), or it is possible to arrange one only connecting rod (19) that operates all the axis (3) simultaneously.

19. Support structure (1) according to any of two previous claims, in which the motorised drive (21), is constituted by a Scottish mechanism (23).

20. Support structure (1) according to the previous claim, which includes a joint linear actuator (24) of the axis of rotation (3) of the panel, to which this linear actuator (24) transfers relatively a perpendicular guide (25), guides (25) through which (1) one joint axis (26) of the structure slides, placed under the polar axis (3).

21. Structure (1) according to any of the previous claims, in which the above mentioned connecting rod (19) is connected by means of an absorber (27) to a fixed point (28) of the structure (1), for example a point arranged in an axis of rotation, so that it allows to absorb and to prevent them from transmitting the vibrations originated by the wind on the plates to the structure.

22. Support structure (1) according to any of the previous claims, which includes a mechanism of fixing of the plates with the axis provided with a top fixing clamp (29) and a bottom fixing clamp (30).

23. Structure according to the previous claim, in which both clamps (29, 30) are sliding on the axis (3), or only one of them (29 ó 30), and they include for the side faced at the edge of the plate (2) a few edges (31) of support inclined to press the plate (2) against the axis (3).

24. Structure according to the previous claim, in which the inclinations of both clamps (29, 30) are calculated to guarantee an identical lateral force of friction in the upper and lower sides of the plate (2), to avoid any misalignment of the ideal position of the plates (2).
